# FASCICULE DE BREVET EUROPEEN

(11) **EP 3 007 894 B1**
(45) Date de publication et mention de la délivrance du brevet: **05.08.2020**
(21) Numéro de dépôt: 14734882.5
(22) Date de dépôt: 11.06.2014
(51) Int. Cl.: B29C 43/20, B29C 70/34, B32B 7/12, B32B 15/08, B32B 15/18, B32B 15/20, B32B 27/12, B32B 3/26, B32B 38/18, B32B 37/12, B32B 38/00, B32B 38/04

(54) **PROCÉDÉ D'OBTENTION D'UNE CALE PELABLE NON PLANE ET CALE PELABLE NON PLANE AINSI OBTENUE**
VERFAHREN ZUR HERSTELLUNG EINES NICHT-PLANAREN ABZIEHBAREN UNTERLEGKEILES UND DADURCH HERGESTELLTER NICHT-PLANARER ABZIEHBARER UNTERLEGKEIL
PROCESS FOR OBTAINING A NON-PLANAR PEELABLE SHIM AND NON-PLANAR PEELABLE SHIM THUS OBTAINED

(30) Priorité: 14.06.2013 FR 1355565
(43) Date de publication de la demande: 20.04.2016
(73) Titulaire: Société LAMECO, 78190 Trappes (FR)
(72) Inventeur: GASTEL, Yann Maurice, 78760 Jouars Pontchartrain (FR)
(74) Mandataire: Lefevre-Groboillot, David André
(86) Numéro de dépôt international: PCT/FR2014/051415
(87) Numéro de publication internationale: WO 2014/199080

(56) Documents cités:
- EP-A1- 2 248 661
- EP-A1- 2 433 791
- EP-A1- 2 517 856
- WO-A1-2014/128394
- FR-A1- 2 831 095
- GB-A- 2 168 002
- DATABASE WPI Week 199021 Thomson Scientific, London, GB; AN 1990-160282 XP002722838, -& JP H02 102029 A (JAMCO INC) 13 avril 1990 (1990-04-13)

## Description

L'invention concerne un procédé d'obtention d'une cale pelable non plane ainsi que la cale pelable non plane obtenue par ce procédé.

Actuellement, les cales pelables sont formées à partir d'un empilement de feuilles de matériau entre lesquelles des couches d'adhésif (une résine polymérisable) permettent de maintenir les feuilles ensemble. Toutefois, l'empilement des feuilles, et donc la cale obtenue à partir de cet empilement, reste plan, c'est-à-dire que chacune des feuilles de l'empilement forme un plan et que toutes les feuilles sont parallèles les unes aux autres. De telles cales pelables sont décrites dans les documents FR 2 716 938 et FR 2 831 095 par exemple. FR 2 831 095 enseigne que le caractère plus ou moins pelable dépend de la présence de solvant dans la résine, d'une éventuelle pré-polymérisation à température ambiante, une opération de polymérisation finale étant effectuée sous pression entre deux supports nécessairement plans et parallèles.

D'autre part, il existe des cales dont l'empilement est agencé de sorte à permettre de réaliser des épaisseurs différentes à des endroits différents de la cale. Une telle cale est décrite par exemple dans le document EP 2 329 546. Toutefois, ces cales à épaisseurs multiples restent des cales dont les empilements sont plans et les surfaces de contact sont, par conséquent, planes elles aussi.

Cependant, il y a des situations qui nécessitent de réaliser un calage entre des pièces dont les surfaces en contact ne sont pas planes. C'est par exemple le cas pour l'agencement de deux pièces ne présentant pas de surface plane l'une avec l'autre. Une telle situation peut se rencontrer si l'une des pièces est une partie de fuselage ou de carrosserie. Par conséquent, il est apparu un besoin de réaliser ou d'obtenir des cales dont l'épaisseur reste ajustable par pelage permettant de réaliser ce type de calage.

Un objet de l'invention est de fournir un procédé qui permet d'obtenir des cales pelables non planes permettant de caler entre elles deux surfaces en contact qui ne sont pas planes.

A cet effet, il est prévu, selon l'invention, un procédé d'obtention d'une cale pelable non plane, utilisant un moule de forme correspondant à la forme de la cale pelable non plane à obtenir, le moule comportant deux parties de formes complémentaires, comportant, pour obtenir un empilement pelable, des étapes de :
- réalisation d'un empilement alternant des feuilles de matériau et des couches d'adhésif;
- mise en place de l'empilement ainsi réalisé dans le moule par positionnement de l'empilement entre les deux parties de formes complémentaires du moule de forme;
- polymérisation de l'adhésif au sein du moule de forme;
   puis des étapes de
- démoulage de l'empilement après polymérisation ; et
- finalisation de la cale pelable non plane à partir de l'empilement après polymérisation démoulé.

Le procédé selon l'invention présente au moins l'une des caractéristiques suivantes :
- l'empilement après polymérisation forme une ébauche de la cale pelable non plane à obtenir ;
- l'étape de finalisation comporte une sous-étape d'usinage de l'empilement après polymérisation aux côtes finales de la cale pelable non plane à obtenir ;
- suite à l'étape de polymérisation mais avant l'étape de démoulage, le procédé comporte une étape (facultative, comme indiqué précédemment) de réalisation d'orifices traversants dans l'empilement après polymérisation non démoulé ;
- l'étape de finalisation de la cale pelable non plane à obtenir s'effectue lorsque l'empilement après polymérisation démoulé est placé dans un moule de finition aux côtes finales de la cale pelable non plane à obtenir ;
- optionnellement le positionnement de l'empilement après polymérisation dans le moule de finition est réalisé à l'aide de piges coopérant avec les orifices traversants ; et,
- optionnellement le moule de forme est agencé de sorte à pouvoir recevoir une série de plusieurs empilements, les empilements étant positionnés de manière adjacente les uns par rapport aux autres, deux par deux.

Il est prévu aussi, selon l'invention, une cale pelable non plane réalisée selon un procédé d'obtention présentant au moins l'une des caractéristiques techniques précédentes, la cale pelable non plane, optionnellement étant une partie d'un cylindre de révolution.

D'autres caractéristiques et avantages de l'invention apparaîtront lors de la description ci-après d'un mode de réalisation de l'invention, en référence aux dessins annexés :
- les figures 1 à 5 illustrent chacune en une vue tridimensionnelle les différentes étapes d'un procédé d'obtention d'une cale pelable non plane selon l'invention ; et
- la figure 6 est une vue tridimensionnelle d'une variante de réalisation d'un moule de forme utilisé dans le procédé d'obtention d'une cale pelable non plane selon l'invention.

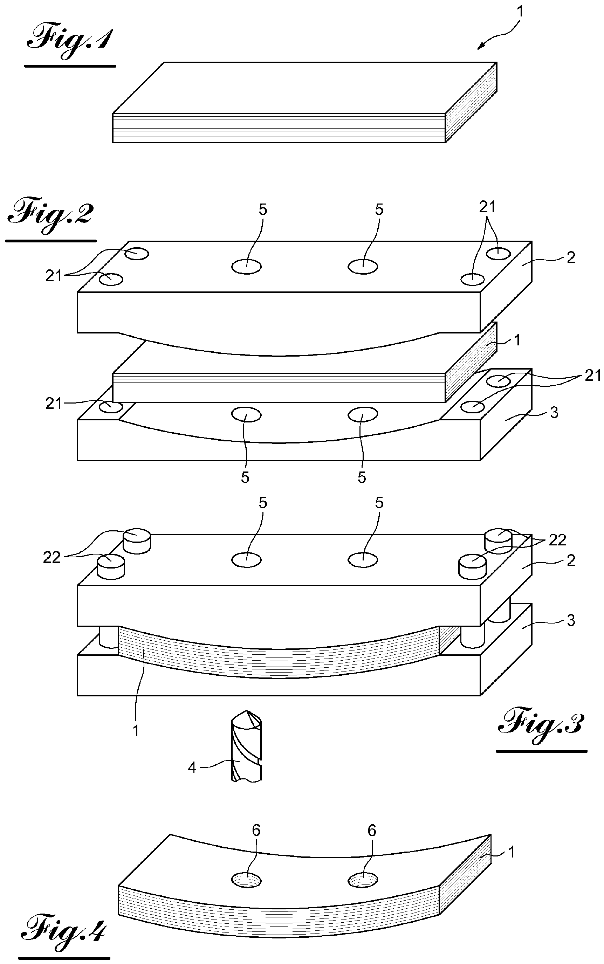

En référence aux figures 1 à 5, nous allons décrire un procédé d'obtention d'une cale pelable non plane dont la forme est une partie d'un cylindre de révolution. Cette forme de la cale pelable non plane selon l'invention est choisie, ici, à but purement illustratif. Le procédé d'obtention d'une telle cale pelable non plane selon l'invention peut s'appliquer à tout type et toute forme de cales pelables non planes pouvant être réalisées à l'aide d'un moule de forme, la cale devant présenter une forme qui doit donc être démoulable facilement.

Dans une première étape du procédé d'obtention d'une cale pelable non plane selon l'invention, un empilement 1 de feuilles de matériau, comme des feuilles métalliques, comme l'acier inoxydable, doux ou l'aluminium ou le laiton ou le titane, etc... , ou encore des feuilles de matériau fibreux tissé ou plastique imprégné de résine et formant avec celle-ci un matériau composite, est réalisé. Entre chacune des feuilles composant cet empilement 1, est réalisée une couche d'adhésif qui va permettre de maintenir les feuilles assemblées les unes aux autres tout en permettant, lors d'une utilisation de la cale pelable non plane selon l'invention, un ajustement de l'épaisseur par délitage d'une ou plusieurs feuilles de matériau empilées. Cette première étape de réalisation de l'empilement 1 du procédé d'obtention d'une cale pelable non plane selon l'invention est connue en soi par les inventeurs. Elle consiste à réaliser un empilement alterné, plan ou non plan, de feuilles de matériau et de couches de l'adhésif. Chaque feuille de matériau présente une résistance intrinsèque au déchirement et chaque couche d'adhésif relie, dans la cale pelable, l'une à l'autre deux feuilles adjacentes de l'empilement par une force de liaison plus faible que la résistance des feuilles au déchirement. Il en résulte que chaque feuille peut, dans la cale pelable, être détachée de l'empilement sans se déchirer.

De manière préférentielle, l'empilement 1 ainsi réalisé présente des dimensions qui sont proches mais supérieures aux côtes d'un développement de la cale pelable non plane à obtenir selon l'invention. De ce fait, l'empilement 1 ainsi réalisé représente une ébauche.

Dans une deuxième étape, l'empilement 1 est positionné dans un moule de forme 2,3 correspondant à la forme de la cale pelable non plane à obtenir selon l'invention, par positionnement de l'empilement entre deux parties de formes complémentaires du moule de forme. De ce fait, le moule de forme présente une partie supérieure 2 et une partie inférieure 3. Les deux parties 2 et 3 du moule de forme sont complémentaires l'une de l'autre. L'empilement 1 précédemment réalisé est positionné entre les deux parties 2 et 3 du moule de forme. Ainsi, si l'empilement a été réalisé sur la partie 2, la partie 3 peut être posée sur l'empilement.

Sur une partie extérieure, les parties 2 et 3 présentent des orifices 21 traversant toute l'épaisseur. D'autre part, une autre série de trous traversants 5 est réalisée dans les épaisseurs des parties 2 et 3 du moule de forme qui sont destinées à être en regard de l'empilement 1, lorsque celui-ci se trouve au sein du moule de forme. Une fois l'empilement 1 positionné entre les deux parties 2 et 3 du moule de forme, les orifices 21 des parties 2 et 3 se retrouvent en regard les uns des autres par paires sans que l'empilement 1 n'interfère. Les orifices traversants 5 de la partie 2 sont, quant à eux, en regard avec les orifices traversants 5 de la partie 3, deux à deux, mais l'empilement 1 interfère avec ceux-ci. Ensuite, des tirants 22 sont introduits dans les différents orifices traversants 21 des parties 2 et 3 du moule de forme, ce qui va permettre de mettre en compression, au sein du moule de forme, l'empilement 1 par serrage des tirants, comme cela est illustré en figure 3.

Ensuite, le moule de forme comprenant l'empilement 1 subit un cycle de cuisson permettant de polymériser l'adhésif situé entre les feuilles de matériau de l'empilement 1, ce dernier étant en compression, pour obtenir un cale pelable, au sein du moule de forme pour que la cale soit non plane.

Une fois l'étape de cuisson réalisée, une étape de perçage peut être réalisée avant le démoulage. Pour cela, un foret 4 est introduit dans les orifices traversants 5 des parties 2 et 3 permettant de réaliser des trous traversants 6 dans l'épaisseur de l'empilement 1 après polymérisation.

Ensuite, une étape de démoulage est réalisée permettant d'obtenir un empilement après polymérisation 1 avec éventuellement des trous traversants 6 tel qu'illustré à la figure 4. De manière générale après démoulage, l'empilement 1 après polymérisation démoulé présente des dimensions qui sont supérieures aux côtes finales de la cale pelable non plane à obtenir selon l'invention. L'empilement 1 après polymérisation démoulé est alors une ébauche de la cale pelable non plane à obtenir.

Enfin, une étape de finalisation de la cale pelable non plane à partir de l'empilement 1 après polymérisation mis en forme issu de l'étape précédente est réalisée. Pour cela, l'empilement 1 après polymérisation mis en forme est positionné dans un moule de finition comportant deux parties 11 et 12 complémentaires l'une de l'autre dont les dimensions extérieures sont égales aux côtes de la cale pelable non plane selon l'invention à finaliser. L'empilement après polymérisation 1 est positionné parfaitement au sein du moule de finition en utilisant des piges de positionnement 10 qui passent à travers les orifices traversants 6 réalisés dans l'empilement 1 après polymérisation. Ensuite, à l'aide par exemple d'une fraise 7, l'empilement après polymérisation 1 est rectifié par usinage aux dimensions de la cale pelable non plane selon l'invention à obtenir. Pour cela, la fraise 7 est déplacée le long des bords latéraux du moule de finition en en faisant le tour, obtenant ainsi les côtes finales de la cale non plane à obtenir. Il est à noter qu'il est possible d'utiliser tout type d'usinage permettant de finaliser la cale pelable non plane selon l'invention à partir de l'empilement 1 après polymérisation mis en forme.

Une fois cette étape de finalisation réalisée, la cale pelable non plane selon l'invention ainsi obtenue est retirée du moule de finition et peut être utilisée dans un assemblage entre deux composants présentant des surfaces non planes mais complémentaires de la forme de la cale pelable non plane selon l'invention ainsi obtenue.

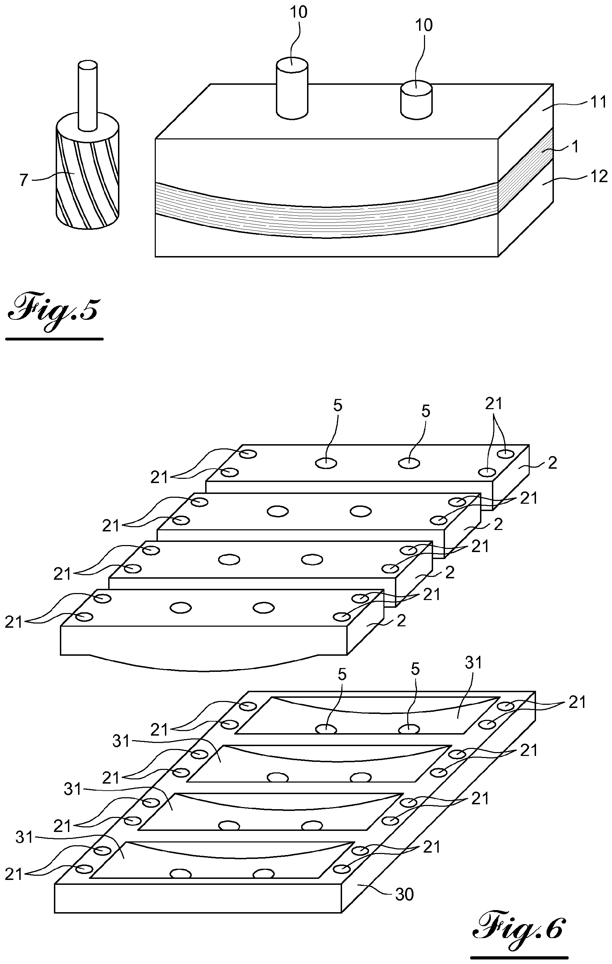

Le moule de forme comportant les parties 2 et 3 précédemment décrit ne permet de mettre en forme qu'un seul empilement à la fois. Afin de mettre en forme plusieurs empilements 1 en même temps, une variante de réalisation du moule de forme est illustrée à la figure 6. Ici, à la figure 6, la variante de réalisation du moule de forme permet de mettre en forme quatre empilements 1 en même temps. Pour cela, le moule de forme selon cette variante de réalisation comporte une partie inférieure 30 présentant une série d'empreintes 31 qui sont, comme illustré à la figure 6, mises parallèles les unes aux autres, et peuvent recevoir chacune un empilement 1 à mettre en forme. En variante de réalisation, ces empreintes 31 peuvent être positionnées dans le prolongement les unes des autres ou encore en damier permettant d'obtenir un moule de forme de X empreintes sur Y empreintes. La partie supérieure du moule de forme selon cette variante de réalisation est formée d'une série de parties supérieures 2 précédemment décrites. Il y a donc autant de parties supérieures 2 que d'empreintes 31 réalisées dans la partie inférieure 30 du moule de mise en forme selon cette variante de réalisation. Une telle configuration de cette variante de réalisation du moule de forme permet une grande flexibilité quant au nombre d'empilements 1 à mettre en forme en même temps.

Le procédé d'obtention d'une cale pelable non plane selon l'invention vient d'être décrit en regard d'une cale pelable non plane de forme d'une partie d'un cylindre de révolution. Toutefois, la cale pelable non plane obtenue par le procédé d'obtention selon l'invention qui vient d'être décrit peut être de forme quelconque convexe ou concave ou bien peut comporter des parties convexes et des parties concave, tant que cette forme puisse être démoulable pour être réalisée à l'aide d'un moule de forme en deux parties comme précédemment décrit.

Bien entendu, il est possible d'apporter des modifications à l'invention sans pour autant sortir du cadre de celle-ci.

## Revendications

1. Procédé d'obtention d'une cale pelable non plane comportant des étapes de :
- mise en compression d'un empilement alternant des feuilles de matériau et des couches d'un adhésif polymérisable par cuisson, dans une forme de l'adhésif à polymériser ;
- polymérisation de l'adhésif pour obtenir un adhésif polymérisé, en sorte d'obtenir un empilement pelable, l'empilement étant en compression ;
- démoulage de l'empilement après polymérisation ; et
- finalisation de la cale pelable non plane à partir de l'empilement après polymérisation démoulé, et où la mise en compression et la polymérisation sont effectuées dans un moule de forme (2, 3) correspondant à la forme de la cale pelable non plane à obtenir, l'empilement avant finalisation formant une ébauche de la cale pelable non plane à obtenir et l'étape de finalisation comporte une sous-étape d'usinage de l'empilement après polymérisation aux côtes finales de la cale pelable non plane à obtenir, l'empilement après polymérisation étant placé dans un moule de finition (11,12) de bords latéraux aux côtes finales de la cale pelable non plane à obtenir, l'empilement étant rectifié auxdites côtes.

2. Procédé d'obtention selon la revendication 1, **caractérisé en ce que**, suite à l'étape de polymérisation mais avant l'étape de démoulage, le procédé comporte une étape de réalisation de trous traversants (6) dans l'empilement après polymérisation non démoulé, le positionnement de l'empilement après polymérisation dans le moule de finition étant réalisé à l'aide de piges (10) coopérant avec les trous traversants (6) .

3. Procédé d'obtention selon l'une des revendications 1 à 2, **caractérisé en ce que** le moule de forme est agencé de sorte à pouvoir recevoir une série de plusieurs empilements, les empilements étant positionnés de manière adjacente les uns par rapport aux autres, deux par deux.

4. Procédé d'obtention selon l'une des revendications 1 à 3, **caractérisé en ce que** le moule de forme correspond à la forme de la cale pelable à obtenir qui est une partie d'un cylindre de révolution.

5. Procédé d'obtention selon l'une des revendications 1 à 4, **caractérisé en ce que** la polymérisation est obtenue par cuisson de l'empilement en compression.

6. Procédé d'obtention selon l'une des revendications 1 à 5, **caractérisé en ce que** les feuilles de matériau sont des feuilles d'acier inoxydable, d'acier doux, d'aluminium, de laiton, de titane ou de matériau composite.

7. Cale pelable non plane réalisée selon un procédé d'obtention selon l'une des revendications 1 à 6.

8. Cale pelable non plane selon la revendication 7, **caractérisée en ce que** la cale pelable non plane est une partie d'un cylindre de révolution.

9. Utilisation d'une cale pelable selon la revendication 7 ou la revendication 8, pour réaliser un calage entre des pièces dont les surfaces en contact ne sont pas planes.

10. Utilisation d'une cale pelable selon la revendication 9, l'une des pièces étant une partie de fuselage ou de carrosserie ne présentant pas de surface plane.

## Patentansprüche

1. Verfahren zur Herstellung eines nicht-planaren, abziehbaren Unterlegekeils, aufweisend die Schritte:
- Komprimieren eines Stapels aus sich abwechselnden Materialbögen und Schichten eines polymerisierbaren Haftstoffs durch Brennen in eine Form des zu polymerisierenden Haftstoffs;
- Polymerisieren des Haftstoffs, um einen polymerisierten Haftstoff zu erhalten, so dass ein abziehbarer Stapel erhalten wird, wobei der Stapel komprimiert ist;
- Entformen des Stapels nach der Polymerisierung; und
- Endbearbeiten des nicht-planaren, abziehbaren Unterlegekeils aus dem entformten Stapel nach Polymerisierung, und wobei das Komprimieren und das Polymerisieren in einer Formungsform (2, 3) durchgeführt werden, die der Form des herzustellenden nicht-planaren, abziehbaren Unterlegekeils entspricht, wobei der Stapel vor der Endbearbeitung einen Rohling des nicht-planaren, abziehbaren Unterlegekeils bildet und der Endbearbeitungsschritt einen Bearbeitungs-Unterschritt des Stapels nach der Polymerisierung auf die Endmaße des herzustellenden nicht-planaren, abziehbaren Unterlegekeils aufweist, wobei der Stapel nach der Polymerisierung in eine Endbearbeitungsform (11, 12) mit Seitenrändern mit den Endmaße des nicht-planaren, abziehbaren Unterlegekeils platziert wird, wobei der Stapel auf die Maße korrigiert wird.

2. Herstellungsverfahren nach Anspruch 1, **dadurch gekennzeichnet, dass** das Verfahren nach dem Polymerisierungsschritt, aber vor dem Entformungsschritt einen Schritt der Herstellung von Durchgangslöchern (6) in dem nicht entformten Stapel nach der Polymerisierung aufweist,
wobei die Positionierung des Stapels nach der Polymerisierung in der Endbearbeitungsform mit Hilfe von Stiften (10) erfolgt, die mit den Durchgangslöchern (6) zusammenwirken.

3. Herstellungsverfahren nach einem der Ansprüche 1 bis 2, **dadurch gekennzeichnet, dass** die Formungsform derart eingerichtet ist, um eine Reihe mehrerer Stapel aufnehmen zu können, wobei die Stapel paarweise nebeneinander positioniert sind.

4. Herstellungsverfahren nach einem der Ansprüche 1 bis 3, **dadurch gekennzeichnet, dass** die Formungsform der Form des herzustellenden abziehbaren Unterlegekeils entspricht, der ein Teil eines Drehzylinders ist.

5. Herstellungsverfahren nach einem der Ansprüche 1 bis 4, **dadurch gekennzeichnet, dass** die Polymerisierung durch Brennen des komprimierten Stapels erhalten wird.

6. Herstellungsverfahren nach einem der Ansprüche 1 bis 5, **dadurch gekennzeichnet, dass** die Materialbögen Bögen aus nichtrostendem Stahl, Flussstahl, Aluminium, Messing, Titan oder aus Kompositmaterial sind.

7. Nicht-planarer, abziehbarer, nach einem Herstellungsverfahren nach einem der Ansprüche 1 bis 6 hergestellter Unterlegekeil.

8. Nicht-planarer, abziehbarer Unterlegekeil nach Anspruch 7, **dadurch gekennzeichnet, dass** der nicht-planare, abziehbare Unterlegekeil ein Teil eines Drehzylinders ist.

9. Verwendung eines abziehbaren Unterlegekeils nach Anspruch 7 oder Anspruch 8 zur Herstellung einer Verkeilung zwischen Teilen, deren Oberflächen im Kontakt nicht planar sind.

10. Verwendung eines abziehbaren Unterlegekeils nach Anspruch 9, wobei eines der Teile ein Rumpf- oder Karosserieteil ist, das keine planare Oberfläche aufweist.

## Claims

1. A method for obtaining a nonplanar peelable shim including the following steps:
- compressing an alternating stack of sheets of material and layers of an adhesive that is polymerizable by curing, in a form of the adhesive to be polymerized;
- polymerizing the adhesive in order to obtain a polymerized adhesive, so as to obtain a peelable stack, the stack being compressed;
- stripping the stack after polymerization; and
- finalizing the nonplanar peelable shim from the stack after stripped polymerization,
and where the compression and the polymerization are done in a shaping mold (2, 3) corresponding to the shape of the nonplanar peelable shim to be obtained, the stack before finalization forming a blank of the nonplanar peelable shim to be obtained and the finalization step includes a sub-step for machining the stack after polymerization to the final dimensions of the nonplanar peelable shim to be obtained,
the stack after polymerization being placed in a finishing mold (11, 12) with lateral edges at the final dimensions of the nonplanar peelable shim to be obtained, the stack being corrected to said dimensions.

2. The obtaining process according to claim 1, **characterized in that**, following the polymerization step but before the stripping step, the method includes a step for making through holes (6) in the stack after non-stripped polymerization,
the positioning of the stack after polymerization in the finishing mold being done using rods (10) cooperating with the through holes (6).

3. The obtaining process according to one of claims 1 to 2, **characterized in that** the shaping mold is arranged so as to be able to receive a series of several stacks, the stacks being positioned adjacent to one another, in pairs.

4. The obtaining process according to one of claims 1 to 3, **characterized in that** the shaping mold corresponds to the shape of the peelable shim to be obtained, which is a part of a cylinder of revolution.

5. The obtaining process according to one of claims 1 to 4, **characterized in that** the polymerization is obtained by curing of the compressed stack.

6. The obtaining process according to one of claims 1 to 5, **characterized in that** the sheets of material are sheets of stainless steel, soft steel, aluminum, brass, titanium or composite material.

7. A nonplanar peelable shim made according to an obtaining process according to one of claims 1 to 6.

8. The nonplanar peelable shim according to claim 7, **characterized in that** the nonplanar peelable shim is part of a cylinder of revolution.

9. A use of a peelable shim according to claim 7 or claim 8, in order to produce shimming between parts whereof the surfaces in contact are nonplanar.

10. The use of a peelable shim according to claim 9, one of the parts being a fuselage or body part not having a planar surface.
